# EUROPEAN PATENT SPECIFICATION

(11) **EP 2 206 030 B1**
(45) Date of publication and mention of the grant of the patent: **03.08.2011**
(21) Application number: 08799115.4
(22) Date of filing: 04.09.2008
(51) Int. Cl.: G05D 1/02

(54) **CHECKLIST ADMINISTRATION SYSTEM FOR A VEHICLE**
CHECKLISTEN-ADMINISTRATIONSSYSTEM FÜR EIN FAHRZEUG
SYSTÈME DE GESTION DE LISTE DE CONTRÔLE POUR UN VÉHICULE

(30) Priority: 30.10.2007 US 929693
(43) Date of publication of application: 14.07.2010
(73) Proprietor: Raytheon Company, Waltham, MA 02451-1449 (US)
(72) Inventor: ADAMS, Brian, A., Fairfax VA 22032 (US); SMITH, Timothy, D., Annandale VA 22003 (US); PARKER, Thomas, L., Falls Church VA 22042-1423 (US); YEAGER, Matthew, R., Centerville VA 20121 (US)
(74) Representative: Lawrence, John
(86) International application number: PCT/US2008/075157
(87) International publication number: WO 2009/058475

(56) References cited:
- EP-A1- 0 974 885
- WO-A1-95/26012
- WO-A1-97/26637
- WO-A2-02/25215
- GB-A- 2 420 646
- US-A1- 2002 120 375
- US-B1- 6 633 801

## Description

### TECHNICAL FIELD OF THE DISCLOSURE

This disclosure relates generally checklists, and more particularly, to a checklist administration system for a vehicle and a method of using the same.

### BACKGROUND OF THE DISCLOSURE

An unmanned vehicle is a type of vehicle having no onboard pilot or driver. Unmanned vehicles may be beneficially used where direct human involvement is not needed or desired. For example, unmanned vehicles may be used in military confrontations in lieu of manned vehicles where risk of bodily injury may be relatively high or in contaminated areas that may be generally unsafe for human habitation. Examples of the use of checklists and monitoring devices in manned vehicles can be found in WO 95/26012, US 2002/120375, GB 2420646, and WO 97/26637.

### SUMMARY OF THE DISCLOSURE

According to one embodiment, code embodied in a computer readable storage medium is configured to generate a checklist for a vehicle by receiving a measured value obtained from at least one sensor configured on the vehicle, setting a parameter value that is associated with the at least one sensor to the measured value, and displaying the checklist on a user interface. The checklist has a number of parameter fields associated with various operating characteristics of the vehicle.

Some embodiments of the disclosure may provide numerous technical advantages. For example, one embodiment of the checklist administration system may provide checklists for differing types of vehicles, such as unmanned vehicles from a single unmanned vehicle control station. Generic checklists formatted according to an extensible markup language (XML) schema may be generated during runtime to associate various sensors configured on the unmanned vehicle with parameter fields in each of the generic checklists. When initiated, these parameter fields may automatically be populated with parameter values, thus alleviating manual entry that may be time consuming and burdensome to the user.

Some embodiments may benefit from some, none, or all of these advantages. Other technical advantages may be readily ascertained by one of ordinary skill in the art.

### BRIEF DESCRIPTION OF THE DRAWINGS

A more complete understanding of embodiments of the disclosure will be apparent from the detailed description taken in conjunction with the accompanying drawings in which:
FIGURE 1 is a diagram showing one embodiment of a unmanned vehicle system that may be implemented with a checklist administration system according to the teachings of the present disclosure;
FIGURE 2 is an illustration of one example checklist that may be generated by the checklist administration system of FIGURE 1;
FIGURE 3 is an interaction diagram showing several tasks that may be performed by the checklist administration system of FIGURE 1 to generate a checklist; and
FIGURE 4 is a flowchart showing one embodiment of a series of actions that may be performed by the checklist administration system of FIGURE 1.

### DETAILED DESCRIPTION OF EXAMPLE EMBODIMENTS

Unmanned vehicles that operate without an onboard pilot or driver may include any type of vehicles, such as aircraft, ground based vehicles, or boats. Control of these unmanned vehicles is typically provided by an unmanned vehicle control station that communicates with the unmanned vehicles through a wireless radio-frequency (RF) link. The unmanned vehicle control station may be configured to simultaneously manage a number of differing types of unmanned vehicles. To promote interoperability among differing types of unmanned vehicles through a common user interface, a STANdardization AGreement (STANAG) 4586 specification has been implemented. The STANdardization AGreement 4586 specification generally defines a protocol for communication of an unmanned vehicle control system with various types of unmanned vehicles.

Prior to and during operation, the unmanned vehicle may undergo one or more verification procedures that are performed according to one or more corresponding checklists. The checklist generally includes a sequence of various operating parameters to be verified for proper functionality and/or control actions to be taken once required operational parameters have been achieved. For example, a particular checklist implemented for use with an unmanned aerial vehicle (UAV) prior to take off may include verification of the unmanned vehicle's fuel supply and other suitable operating parameters. In addition to a checklist implemented for use with take off, other checklists may be implemented for other tasks performed by unmanned vehicles, such as a change in flight plan, or in response to specific events or situations that may arise during any particular mission. Verification of unmanned vehicles has been typically accomplished by manually verifying each operating parameter included on the checklist. This verification procedure, however, may be burdensome due to manual intervention for verification of each operating parameter and input of each control action indicated by the checklist. This problem may be worsened due to checklists associated with in-flight emergencies or other time-critical piloting tasks.

Differing types of unmanned vehicles may be designed to accomplish various tasks according to their individual abilities. Each type of unmanned vehicle may have performance characteristics that differ from one another. These differing performance characteristics may pose problems for implementation of a common checklist procedure from a common unmanned vehicle control system that is configured to manage differing types of unmanned vehicles.

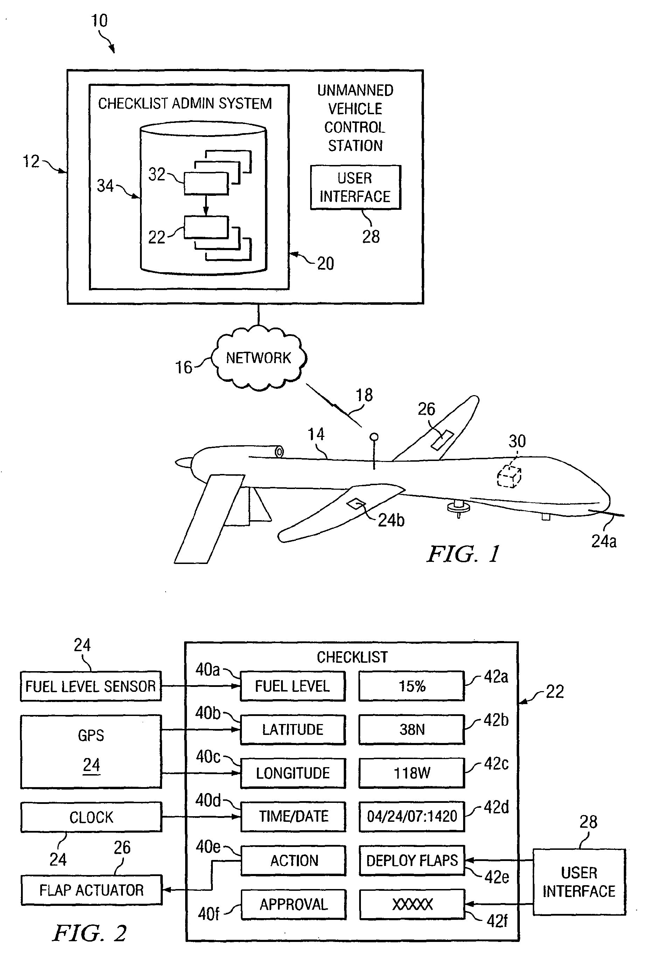

FIGURE 1 shows one embodiment of an unmanned vehicle system 10 that may be implemented with a checklist administration system 20 to provide a solution to these problems as well as other problems. Unmanned vehicle system 10 generally includes an unmanned vehicle control station 12 that controls the operation of an unmanned vehicle 14 through a network 16 and a wireless radio frequency (RF) link 18. According to the teachings of the present disclosure, a checklist administration system 20 may be implemented on an unmanned vehicle system 10 to generate one or more checklists 22 having a number of fields and automatically populate one or more of these fields with measured values from a corresponding one or more sensors 24 disposed on the unmanned vehicle 14.

Unmanned vehicle control station 12 may be implemented on any suitable computing system that executes program instructions stored in a memory. In one embodiment, unmanned vehicle control station 12 has a STANdardization AGreement 4586 compliant interface in which network 16 is a user datagram protocol (UDP) type network. The unmanned vehicle control station 12 having a STANdardization AGreement 4586 interface may provide a common interface for controlling differing types of unmanned vehicles 14.

The unmanned vehicle control station 12 includes a user interface 28 for interactive control of unmanned vehicle 14 by a user. The user interface 28 may include a display, such as a cathode ray tube (CRT) or liquid crystal display (LCD) screen. The user interface 28 may also include one or more input devices, such as a joystick, a keyboard, and/or a mouse for interactive control by the user.

Unmanned vehicle 14 may be any suitable type of unmanned vehicle 14 that may be remotely controlled by unmanned vehicle control station 12. For example, unmanned vehicle 14 may be an aircraft that flies through the air, a ground-based vehicle that moves over the ground, or a boat that travels over the surface of the water. Although the checklist administration system 20 is directed to an unmanned vehicle 14 that in this particular case is an unmanned aerial vehicle, it should be appreciated that the checklist administration system may also be implemented for use with manned vehicles.

Unmanned vehicle 14 may include a vehicle computing system 30 that communicates with the unmanned vehicle control station 12 and manages operation of various aspects of the unmanned vehicle 14. The vehicle computing system 30 may control operation of the unmanned vehicle 14 by transmitting and receiving messages from the unmanned vehicle control station 12 and manipulating the direction of the unmanned vehicle 14 in response to these messages. Vehicle computing system 30 may be any suitable type of computing system that executes program instructions stored in a memory. The vehicle computing system 30 may be coupled to one or more sensors 24 that measure various operating parameters of the unmanned vehicle's operation. The vehicle computing system 30 may also be coupled to one or more actuators 26 that control various aspects of the unmanned vehicle's operation.

Sensors 24 may include any suitable type of sensor configured on the unmanned vehicle 14. These sensors 24 may measure any particular characteristic of the unmanned vehicle 14. Sensors 24 may include, for example, a wind speed sensor 24a that monitors wind speed around the unmanned vehicle 14, and an aileron control surface sensor 24 that measures the orientation of ailerons configured on the unmanned vehicle 14. Other measurable characteristics provided by the one or more sensors 24 include, for example, characteristics associated with operation of the unmanned vehicle 14, such as hydraulic pressure level, oil pressure level, fuel level, servo motor position settings, control surface settings, payload status, and the like. Measurable characteristics may also include various environmental characteristics, such as ambient temperature, wind speed, proximity sensors, or other characteristics of the unmanned vehicle's environment. Sensors 24 such as these may be used by the checklist administration system 20 to automatically populate pertinent parameter fields of the one or more checklists 22 for verification of the unmanned vehicle 14 in a relatively timely manner.

Actuators 26 may include any suitable type of device that controls some aspect of the unmanned vehicle 14. For example, actuators 26 may be configured to control flaps, ailerons, one or more rudders, navigation lights, engine throttle, brakes, fuel tank selection, electrical power switch to one or more electrical appliances on the unmanned vehicle 14. Actuators 26 may also include a controlling function of the vehicle computing system 30, such as an altitude set point and/or a heading set point for an autopilot system. In the particular embodiment shown, actuator 26 controls the flaps of the unmanned vehicle 14.

Certain embodiments incorporating a checklist in which one or more fields are automatically populated with sensor information may provide an advantage in that the unmanned vehicle 14 may be verified for compliance with the checklist in a relatively faster manner than with known checklist procedures that require manual entry. A further advantage may be provided in that human error caused by incorrect entry of information into the checklist may be alleviated.

In some embodiments in which unmanned vehicle control station 12 is configured to manage differing types of unmanned vehicles 14, the checklists 22 may be generated from one or more generic checklists 32 stored in system memory 34. Each generic checklist 32 may include a set of common operating parameters for unmanned vehicles 14 controlled by unmanned vehicle control station 12. For example, one particular generic checklist 32 may be a "take off" checklist that may be used to verify a number of common operating parameters prior to "take off" of the unmanned vehicle 14. Various unmanned vehicles 14, however, may have characteristics that differ from one another and thus may have differing operating parameters. Thus in one embodiment, the checklist administration system 20 may be operable to parse a generic checklist 32 into a checklist 22 for use with any one particular type of unmanned vehicle 14 controlled by unmanned vehicle control station 12.

Certain embodiments incorporating generic checklists 32 may provide an advantage over known checklist administration systems in that checklists 22 pertinent to various types of unmanned vehicles 14 may be administered using a single unmanned vehicle control station 12. For unmanned vehicle control stations that have a STANdardization AGreement 4586 interface, the checklist administration system 20 may administer checklists that are ideally suited for particular types of unmanned vehicles 14 using a common set of generic checklists 32.

In one embodiment, generic checklists 32 may be formatted according to an extensible markup language (XML) schema. The extensible markup language is a general purpose markup language that enables formatting of disparate types of data into a common format. According to this particular embodiment, use of generic checklists 32 formatted according to the extensible markup language schema allows checklists 22 to be stored in a format that is readily usable by various types of unmanned vehicles 14.

In another embodiment, generic checklists 32 may be generated from intermediate code that is executed on a dynamic translator configured in the unmanned vehicle control station 12. One example of an intermediate code that may be configured for use with the checklist administration system is the **Java^{™}** programming system. In this particular example, generic checklists 32 may be implemented as **Java^{™}** bytecode that is executed on a dynamic translator commonly referred to as a Java virtual machine (JVM). Checklists 22 may be implemented for use with different types of unmanned vehicles 14 by adapting bytecode that associates varying sensors 24 or other operating characteristics with operating parameters included in its associated generic checklist 32.

FIGURE 2 shows one embodiment of a checklist 22 that may be generated by checklist administration system 20 and displayed upon the user interface 28. Checklist 22 generally includes a number of parameter fields 40 that each have a corresponding parameter value 42. Each parameter field 40 may include a particular characteristic of the unmanned vehicle 14 pertinent to a particular task or sub-task to be performed. In this particular checklist 22, parameter fields include a fuel level parameter field 40a, a latitude parameter field 40b, a longitude parameter field 40c, a Time/Date parameter field 40d, and action parameter field 40e, and an approval parameter field 40f. The fuel level parameter field 40a includes a parameter value 42a that may be obtained from a fuel level sensor 24 disposed on the fuel tank of the unmanned vehicle 14. The latitude parameter field 40b and the longitude parameter field 40c include latitude and longitude coordinates 42b and 42c, respectively, that may be obtained from a global positioning sensor (GPS) sensor 24 configured on the unmanned vehicle 14. The date/time parameter field 40d includes a parameter value 42d that may be populated by a measured value of an onboard clock disposed on the unmanned vehicle 14. The action parameter field 40e and approval parameter field 40f includes parameter values 42e and 42f that may be inputted by the user interface 28 or automatically by the checklist administration system 20. In operation, the checklist 22 may be displayed on user interface 28 for view by the user. In this particular example, the user may enter a "deploy flaps" parameter value 42e in the action parameter field 40e and enter an approval parameter value 42g in the approval parameter field 40f.

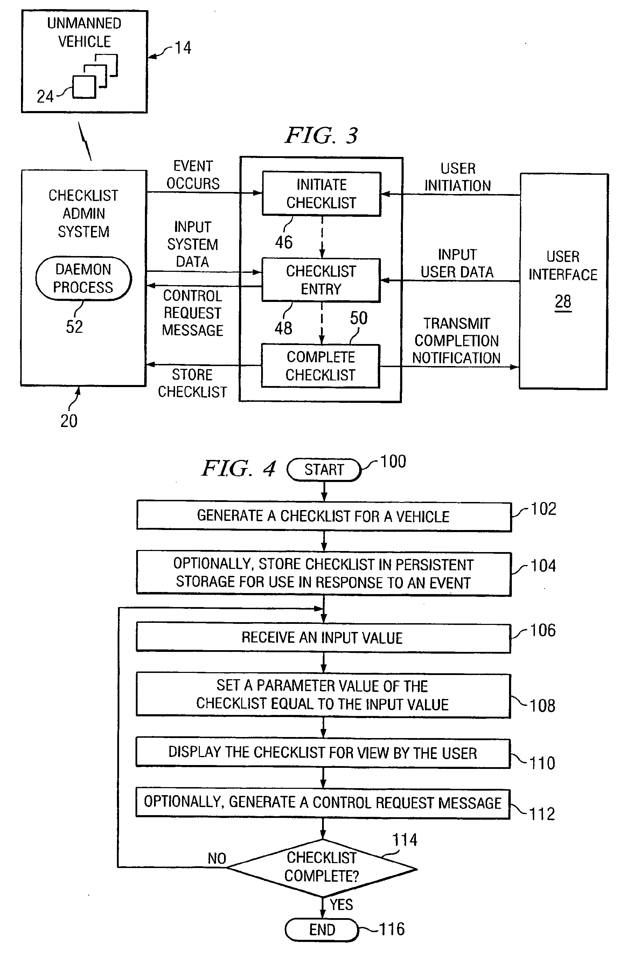

FIGURE 3 shows an interaction diagram that represents one embodiment of how one particular checklist 22 may be administered by the checklist administration system 20. Administration of checklist 22 by checklist administration system 20 includes an initiate checklist task 46, a checklist entry task 48, and a complete checklist task 50.

The initiate checklist task 46 may be performed by the user through the user interface 28 or in response to an event from the unmanned vehicle 14. Checklists 22 may be initiated through the user interface 28 by any suitable approach. In one embodiment, the checklist 22 may be unilaterally initiated by the user. That is, the user may initiate execution of the checklist 22 by inputting a specified sequence of commands through the user interface 28. For example, the user may desire to initiate a checklist 22 due a perceived situation as seen from the unmanned vehicle control station 12. In another embodiment, the checklist 22 may be also be initiated in response to an event from the one or more sensors 24 configured on the unmanned vehicle 14. For example, checklist 22 may be initiated automatically when the fuel level measured by fuel level sensor 24 drops below 15% or when a certain amount of time has elapsed. Thus, initiation of the checklist 22 by the checklist administration system 20 may be initiated in response to user input or to specified criteria from the one or more sensors 24.

In one embodiment, initiation of checklists 22 in response to an event may be provided by a daemon process 52 executed on the unmanned vehicle control station 12. In another embodiment, the daemon process 52 may be executed on vehicle computing system 30 to initiate a checklist 22 in response to an event. The daemon process 52 may be executed as a background process to constantly poll particular information provided by one or more sensors 24 configured on unmanned vehicle 14. If the limits of these various sensors 24 meet certain specified criteria, the daemon process 52 may be configured to automatically generate its associated checklist 22 on the user interface 28.

The checklist entry task 48 may be performed to receive sensor data from the one or more sensors 24 through the checklist administration system 20 and/or user data from a user through the user interface 28. The checklist administration system 20 may automatically input sensor data from particular sensors 24 associated with various parameter fields 40 of the checklist 22. Entry of user data through the user interface 28 may be provided for other parameter fields 40 that may not be automatically inputted by the checklist administration system 20.

The checklist entry task 48 may generate a control request message that is used by the checklist administration system 20 to control one or more actuators 26 on the unmanned vehicle 14. For example, a "deploy flaps" control request message may be generated once certain criteria represented by the parameter fields 40 are inputted to the checklist 22. In one embodiment, the control request message may be automatically generated by the checklist administration system 20. In another embodiment, the control request message may be generated in response to manual entry through the user interface 28.

The complete checklist task 50 may be performed when the parameter fields 40 have been inputted with data from the one or more sensors 24 through the checklist administration system 20 or the user through the user interface 28. The complete checklist task 50 may then be stored in system storage 34 for view at a later time and cause a transmit complete notification to be transmitted to the user through the user interface 28.

FIGURE 4 is a flowchart showing one embodiment of a series of actions that may be performed by the checklist administration system 20. In act 100, the process is initiated. The process may be initiated by applying power to and performing any suitable bootstrapping operations to unmanned vehicle control station 12 and vehicle computing system 30 disposed on unmanned vehicle 14.

In act 102, a checklist 22 may be generated for any suitable unmanned vehicle 14 for which verification of certain operating parameters are desired. In other embodiments, the checklist 22 may be generated for any vehicle for which verification using an automatically generated checklist is desired. Examples of such vehicles may include, for example, manned ground-based vehicles, manned aircraft, or manned boats. In one embodiment, the checklist 22 may be generated from a generic checklist 32 by associating one or more operating parameters 40 of the unmanned vehicle 14 with a corresponding one or more parameter fields 40 from the generic checklist 32.

In act 104, the checklist 22 may optionally be stored in system storage 34 for use in response to an event. In one embodiment, a daemon process 52 may be executed on the unmanned vehicle control station 12 or vehicle computing system 30. This daemon process 52 may continually poll one or more sensors 24 disposed on the unmanned vehicle 14. If polled information from the one or more sensors 24 exceeds a specified value, the daemon process 52 may automatically initiate the checklist 22.

In act 106, the checklist administration system 20 receives an input value. In one embodiment, the input value may be a measured value from at least one sensor 24 configured on the unmanned vehicle 14. This measured value may be associated with one particular parameter field 40 of the checklist 22. In one embodiment, a number of measured values may be obtained for a corresponding number of sensors 24 configured on the unmanned vehicle 14. In another embodiment, the input value may be received from the user interface 28.

In act 108, the parameter value 42 of the particular parameter field 40 may be set equal to the input value from the sensor 24 or from the user interface 28. In the particular embodiment in which a number of measured values are obtained, a number of parameter values 42 may be set to the measured values obtained from the sensors 24.

In act 110, the checklist 22 and associated measured value may be displayed on the user interface 28 for view by the user. Given this checklist 22, the user may view the at least one measured value and other parameter fields 40 and complete the checklist 22 in a normal manner.

In act 112, the checklist administration system 20 may optionally generate a control request message that is used to control an actuator 26 configured on the unmanned vehicle 14. In one embodiment, the checklist administration system 20 may be configured to automatically generate a control request message, such as, when specified criteria on the checklist 22 are achieved. In another embodiment, the checklist administration system 20 may be configured to generate the control request message in response to user input from the user interface 28.

In act 114, the checklist administration system 20 may check whether the checklist 22 is complete. If not, processing may continue at act 106. Once all parameter fields 40 have been inputted, processing continues at act 116 in which the checklist administration system 20 may be halted.

A checklist administration system 20 has been described that may automatically populate various portions of a checklist 22 using information provided by various sensors 24 configured on an unmanned vehicle 14. Generic checklists 32 may provide a common set of operating parameters for various types of checklists 22 to be used with an unmanned vehicle control station 12 that controls various types of unmanned vehicles 14. The generated checklists 22 may be initiated due to direct user intervention or due to particular events or triggers during operation of the unmanned vehicle 14. Thus, unmanned vehicle control stations 12 configured to control differing types of unmanned vehicles 14 may administer checklists 22 for use with various types of unmanned vehicles 14 and initiate these checklists 22 manually or in response to a detected event during the unmanned vehicle's mission.

## Claims

1. A checklist administration system (20) for an unmanned vehicle system (10) comprising an unmanned vehicle control station (12) in communication with at least one sensor (24) that is configured to measure an operating parameter of an unmanned vehicle (14), the checklist administration system (20) of the unmanned vehicle control station (12) being operable to:
generate a checklist (22) having a plurality of parameter fields (40), each of the parameter fields having an associated parameter value (42), one of the parameter fields (40) representing the operating parameter;
receive a measured value from the at least one sensor (24);
set the parameter value (42) associated with the one of the parameter fields (40) equal to the measured value;
display the checklist (22) on a user interface (28); and
automatically generate a control request message in response to specified criteria on the checklist (22) being achieved, the control request message operable to control the unmanned vehicle (14).

2. The checklist administration system (20) of claim 1, wherein the unmanned vehicle control station (12) is further operable to control at least one actuator (26) coupled to the unmanned vehicle (14).

3. The checklist administration system (20) of claim 1, further operable to generate the checklist (22) from a generic checklist having a plurality of generic parameters by associating at least a subset of the generic parameters with a corresponding subset of the parameter fields (40).

4. The checklist administration system (20) of claim 3, wherein the generic checklist is formatted according to an extensible markup language (XML) schema.

5. The checklist administration system (20) of claim 3, further operable to generate the checklist (22) from an intermediate code.

6. The checklist administration system (20) of claim 1, further operable to generate the checklist (22) in response to an event from at least one second sensor (24) configured on the unmanned vehicle (14).

7. The checklist administration system (20) of claim 6, further operable to respond to the event using a daemon process (52).

8. A method comprising:
generating a checklist (22) having a plurality of parameter fields (40) associated with a plurality of operating parameters of an unmanned vehicle (14), each of the parameter fields (40) having an associated parameter value (42);
receiving a measured value from at least one sensor (24) configured on the vehicle (14), the measured value associated with one of the plurality of parameter fields (40);
setting the parameter value (42) associated with the one of the parameter fields (40) equal to the measured value;
displaying the checklist (22) on a user interface (28); and
automatically generating a control request message in response to specified criteria on the checklist (22) being achieved, the control request message operable to control the unmanned vehicle (14).

9. The method of claim 8, further comprising controlling at least one actuator (26) coupled to the vehicle (14).

10. The method of claim 8, wherein generating a checklist (22) further comprises generating the checklist (22) from a generic checklist having a plurality of generic parameters by associating at least a subset of the generic parameters with a corresponding subset of the parameter fields (40).

11. The method of claim 9, wherein generating the checklist (22) from a generic checklist further comprises generating a checklist (22) from a generic checklist that is formatted according to an extensible markup language (XML) schema.

12. The method of claim 8, wherein generating a checklist (22) further comprises generating the checklist (22) in response to an event from at least one second sensor (24) configured on the vehicle (14).

13. The method of claim 12, wherein generating the checklist (22) in response to the event further comprises generating the checklist (22) in response to the event using a daemon process (52).

14. A computer readable medium including code for administering a checklist (22) in an unmanned vehicle system (14) according to the method of any of claims 8 to 13.

## Patentansprüche

1. Checklisten-Administrationssystem (20) für ein unbemanntes Fahrzeugsystem (10), das aufweist: eine Steuerstation (12) für ein unbemanntes Fahrzeug in Kommunikation mit wenigstens einem Sensor (24), der konfiguriert ist, um einen Betriebsparameter eines unbemannten Fahrzeugs (14) zu messen, wobei das Checklisten-Administrationssystem (20) der Steuerstation (12) für ein unbemanntes Fahrzeug betriebsfähig ist, um:
eine Checkliste (22) mit mehreren Parameterfeldern (40) zu erzeugen, wobei jedes der Parameterfelder einen zugeordneten Parameterwert (42) hat, wobei eines der Parameterfelder (40) den Betriebsparameter darstellt;
Empfangen eines Messwerts von dem wenigstens einen Sensor (24);
Festlegen des Parameterwerts (42), der zu dem einen der Parameterfelder (40) gehört, gleich dem Messwert;
Anzeigen der Checkliste (22) auf einer Benutzerschnittstelle (28); und automatisches Erzeugen einer Steueranforderungsnachricht ansprechend darauf, dass spezifizierte Kriterien auf der Checkliste (22) erfüllt sind, wobei die Steueranforderungsnachricht betriebsfähig ist, um das unbemannte Fahrzeug (14) zu steuern.

2. Checklisten-Administrationssystem (20) nach Anspruch 1, wobei die Steuerstation (12) für ein unbemanntes Fahrzeug ferner betriebsfähig ist, um wenigstens einen Aktuator (26) zu steuern, der mit dem unbemannten Fahrzeug (14) gekoppelt ist.

3. Checklisten-Administrationssystem (20) nach Anspruch 1, das ferner betriebsfähig ist, um die Checkliste (22) aus einer generischen Checkliste mit einer Vielzahl generischer Parameter zu erzeugen, indem wenigstens eine Teilmenge der generischen Parameter einer entsprechenden Teilmenge der Parameterfelder (40) zugeordnet wird.

4. Checklisten-Administrationssystem (20) nach Anspruch 3, wobei die generische Checkliste gemäß einem Extensible Markup Language- (XML = erweiterbare Auszeichnungssprache) Schema formatiert ist.

5. Checklisten-Administrationssystem (20) nach Anspruch 3, das ferner betreibbar ist, um die Checkliste (22) aus einem Zwischencode zu erzeugen.

6. Checklisten-Administrationssystem (20) nach Anspruch 1, das ferner betreibbar ist, um die Checkliste (22) ansprechend auf ein Ereignis von wenigstens einem zweiten Sensor (24) zu erzeugen, der auf dem unbemannten Fahrzeug (14) konfiguriert ist.

7. Checklisten-Administrationssystem (20) nach Anspruch 6, das ferner betriebsfähig ist, um unter Verwendung eines Deamonprozesses (52) auf das Ereignis zu antworten.

8. Verfahren, das aufweist:
Erzeugen einer Checkliste (22) mit mehreren Parameterfeldern (40) mit mehreren zugeordneten Betriebsparametern eines unbemannten Fahrzeugs (14), wobei jedes der Parameterfelder (40) einen zugeordneten Parameterwert (42) hat;
Empfangen eines Messwerts von dem wenigstens einen Sensor (24), der auf dem Fahrzeug (14) konfiguriert ist, wobei der Messwert einem der mehreren Parameterfelder (40) zugeordnet ist;
Festlegen des Parameterwerts (42), der zu dem einen der Parameterfelder (40) gehört, gleich dem Messwert;
Anzeigen der Checkliste (22) auf einer Benutzerschnittstelle (28); und automatisches Erzeugen einer Steueranforderungsnachricht ansprechend darauf, dass spezifizierte Kriterien auf der Checkliste (22) erfüllt sind, wobei die Steueranforderungsnachricht betriebsfähig ist, um das unbemannte Fahrzeug (14) zu steuern.

9. Verfahren nach Anspruch 8, das ferner wenigstens einen Aktuator (26) steuert, der mit dem Fahrzeug (14) gekoppelt ist.

10. Verfahren nach Anspruch 8, wobei das Erzeugen einer Checkliste (22) ferner das Erzeugen der Checkliste (22) aus einer generischen Checkliste mit einer Vielzahl generischer Parameter aufweist, indem wenigstens eine Teilmenge der generischen Parameter einer entsprechenden Teilmenge der Parameterfelder (40) zugeordnet wird.

11. Verfahren nach Anspruch 9, wobei das Erzeugen der Checkliste (22) aus der generischen Checkliste ferner das Erzeugen einer Checkliste (22) aus einer generischen Checkliste aufweist, die gemäß einem Extensible Markup Language-(XML-) Schema formatiert ist.

12. Verfahren nach Anspruch 8, wobei das Erzeugen einer Checkliste (22) ferner das Erzeugen der Checkliste (22) ansprechend auf ein Ereignis von wenigstens einem zweiten Sensor (24) aufweist, der auf dem unbemannten Fahrzeug (14) konfiguriert ist.

13. Verfahren nach Anspruch 12, wobei das Erzeugen der Checkliste (22) ansprechend auf das Ereignis ferner das Erzeugen der Checkliste (22) ansprechend auf das Ereignis unter Verwendung eines Deamonprozesses (52) aufweist.

14. Computerlesbares Medium, das einen Code zur Administration einer Checkliste (22) in einem unbemannten Fahrzeugsystem (14) gemäß dem Verfahren eines der Ansprüche 8 bis 13 enthält.

## Revendications

1. Système de gestion de liste de contrôle (20) pour un système de véhicule télépiloté (10) comprenant un poste de contrôle de véhicule télépiloté (12) en communication avec au moins un capteur (24) qui est configuré pour mesurer un paramètre opérationnel d'un véhicule télépiloté (14), le système de gestion de liste de contrôle (20) du poste de contrôle de véhicule télépiloté (12) étant utilisable pour :
générer une liste de contrôle (22) ayant une pluralité de champs de paramètre (40), chacun des champs de paramètres ayant une valeur de paramètre associée (42), un des champs de paramètre (40) représentant le paramètre opérationnel ;
recevoir une valeur mesurée de l'au moins un capteur (24) ;
définir la valeur de paramètre (42) associée à celui des champs de paramètres (40) qui est égal à la valeur mesurée ;
afficher la liste de contrôle (22) sur une interface utilisateur (28) ; et
générer automatiquement un message de demande de contrôle en réponse à l'obtention de critères spécifiés sur la liste de contrôle (22), le message de demande de contrôle étant utilisable pour contrôler le véhicule télépiloté (14).

2. Système de gestion de liste de contrôle (20) selon la revendication 1, dans lequel le poste de contrôle de véhicule télépiloté (12) est en outre utilisable pour contrôler au moins un actionneur (26) couplé au véhicule télépiloté (14).

3. Système de gestion de liste de contrôle (20) selon la revendication 1, utilisable en outre pour générer la liste de contrôle (22) à partir d'une liste de contrôle générique ayant une pluralité de paramètres génériques en associant au moins un sous-ensemble des paramètres génériques avec un sous-ensemble correspondant des champs de paramètre (40).

4. Système de gestion de liste de contrôle (20) selon la revendication 3, dans lequel la liste de contrôle générique est formatée selon un schéma de langage de balisage extensible (XML - Extensible Markup Language).

5. Système de gestion de liste de contrôle (20) selon la revendication 3, utilisable en outre pour générer la liste de contrôle (22) à partir d'un code intermédiaire.

6. Système de gestion de liste de contrôle (20) selon la revendication 1, utilisable en outre pour générer la liste de contrôle (22) en réponse à un événement en provenance d'au moins un second capteur (24) configuré sur le véhicule télépiloté (14).

7. Système de gestion de liste de contrôle (20) selon la revendication 6, utilisable en outre pour répondre à l'événement en utilisant un processus démon (52).

8. Procédé consistant à :
générer une liste de contrôle (22) ayant une pluralité de champs de paramètre (40) associés à une pluralité de paramètres opérationnels d'un véhicule télépiloté (14), chacun des champs de paramètre (40) ayant une valeur de paramètre associée (42) ;
recevoir une valeur mesurée d'au moins un capteur (24) configuré sur le véhicule (14), la valeur mesurée étant associée à un de la pluralité de champs de paramètre (40) ;
définir la valeur de paramètre (42) associée à celui des champs de paramètre (40) qui est égal à la valeur mesurée ;
afficher la liste de contrôle (22) sur une interface utilisateur (28) ; et
générer automatiquement un message de demande de contrôle en réponse à l'obtention de critères spécifiés sur la liste de contrôle (22), le message de demande de contrôle étant utilisable pour contrôler le véhicule télépiloté (14).

9. Procédé selon la revendication 8, consistant en outre à contrôler au moins un actionneur (26) couplé au véhicule (14).

10. Procédé selon la revendication 8, dans lequel la génération d'une liste de contrôle (22) consiste en outre à générer la liste de contrôle (22) à partir d'une liste de contrôle générique ayant une pluralité de paramètres génériques en associant au moins un sous-ensemble des paramètres génériques avec un sous-ensemble correspondant des champs de paramètre (40).

11. Procédé selon la revendication 9, dans lequel la génération de la liste de contrôle (22) à partir d'une liste de contrôle générique consiste en outre à générer une liste de contrôle (22) à partir d'une liste de contrôle générique qui est formatée selon un schéma de langage de balisage extensible (XML - Extensible Markup Language).

12. Procédé selon la revendication 8, dans lequel la génération d'une liste de contrôle (22) consiste en outre à générer la liste de contrôle (22) en réponse à un événement en provenance d'au moins un second capteur (24) configuré sur le véhicule (14).

13. Procédé selon la revendication 12, dans lequel la génération de la liste de contrôle (22) en réponse à l'événement consiste en outre à générer la liste de contrôle (22) en réponse à l'événement en utilisant un processus démon (52).

14. Support lisible par ordinateur comprenant un code pour gérer une liste de contrôle (22) dans un système de véhicule télépiloté (14) selon le procédé de l'une quelconque des revendications 8 à 13.
